# EUROPÄISCHE PATENTSCHRIFT

(11) **EP 4 573 893 B1**
(45) Veröffentlichungstag und Bekanntmachung des Hinweises auf die Patenterteilung: **14.10.2026**
(21) Anmeldenummer: 24216807.8
(22) Anmeldetag: 02.12.2024
(51) Int. Cl.: A01K 5/00, A23N 17/00, B01F 27/052, B01F 27/172, B01F 27/922

(54) **MISCHORGAN ODER ENTNAHMEEINRICHTUNG FÜR EINEN BIOMASSE-MISCHER MIT VERSCHLEISSSCHUTZELEMENTEN**
MIXING ELEMENT OR REMOVAL DEVICE FOR A BIOMASS MIXER WITH WEAR PROTECTION ELEMENTS
ORGANE DE MÉLANGE OU DISPOSITIF DE PRÉLÈVEMENT POUR UN MÉLANGEUR DE BIOMASSE DOTÉ D'ÉLÉMENTS ANTI-USURE

(30) Priorität: 21.12.2023 DE 102023136240
(43) Veröffentlichungstag der Anmeldung: 25.06.2025
(73) Patentinhaber: B. Strautmann & Söhne GmbH u. Co. KG, 49196 Bad Laer (DE)
(72) Erfinder: Mayer, Dmitrij, 49186 Bad Iburg (DE)
(74) Vertreter: Dr. Träger & Strautmann PAe PartG mbB

(56) Entgegenhaltungen:
- EP-B1- 2 554 047
- DE-A1- 102021 109 033
- DE-A1- 2 835 112
- FR-A1- 3 023 493
- US-A- 4 416 656
- US-B2- 9 751 055

## Beschreibung

Die Erfindung betrifft ein Mischorgan oder eine Entnahmeeinrichtung zur Verwendung in einem Biomasse-Mischer nach dem Oberbegriff des Anspruchs 1 sowie einen Biomasse-Mischer mit einem solchen Mischorgan. Die Erfindung betrifft weiterhin ein Verschleißschutzelement für ein Mischorgan oder eine Entnahmeeinrichtung eines Biomasse-Mischers sowie ein Verfahren zur Herstellung eines solchen Verschleißschutzelementes.

Mischorgane für Biomasse-Mischer sind in unterschiedlichen Ausführungen beispielsweise in Form von in einem Mischbehälter horizontal oder vertikal angeordneten Mischschnecken oder Mischhaspeln bekannt. Auch die Biomasse-Mischer können in unterschiedlichen Ausführungen vorliegen, beispielsweise in Form von stationären Anlagen zur Beschickung von Biogasanlagen oder in Form von gezogenen oder selbstfahrenden Futtermischwagen.

Unter einer Entnahmeeinrichtungen für einen Biomassemischer wird ein in der Regel am Biomischer angebautes Gerät zur Befüllung des Mischbehälters verstanden. Die Entnahmeeinrichtung kann insbesondere eine an einem Förderarm angebrachte Fräse umfassen mittels welcher die in den Mischbehälter einzufüllende Biomasse aufgenommen und weitergefördert wird.

Allen Systemen gemeinsam ist, dass ein Biomasse-Mischer wenigstens ein Mischorgan zur Durchmischung von organischem Rohstoffen, insbesondere Futtermitteln, aufweist.

Das Dokument US9751055B2 offenbart Schnecken für Futtermischwagen, die dazu ausgebildet sind, faseriges Material mittels an der Schneckenwendel befestigter Messer zu schneiden und zu mischen. Die Messer sind als einzelne Abschnitte ausgeführt, die entlang der Schnecke, beispielsweise in Abständen oder an Ecken, angeordnet sind, und werden mittels mechanischer Befestigungselemente an der Wendel befestigt. Insbesondere kann die Befestigung durch Schrauben erfolgen, die in an der Schneckenstruktur befestigte Schweißmuttern eingreifen, wodurch die Messerabschnitte lösbar an der Wendel angebracht sind.

Aus US 4 416 656 A ist eine Zentrifuge zum Trennen von Feststoff-Flüssigkeitsgemischen bekannt. Die Zentrifuge umfasst eine Trommel und eine darin angeordnete Förderschnecke. Die Förderschnecke ist im äußeren Bereich der Schneckenwindung mit abriebfesten Oberflächenanordnungen bestückt. Die abriebfesten Oberflächenanordnungen werden gebildet in Form von Baugruppen, welche jeweils ein Trägerelement und ein an dem Trägerelement unlösbar angebrachtes Verschleißelement umfassen. Nachteilig an dieser Förderschnecke ist, dass sie für das Mischen unterschiedlicher Feststoffe nicht vorgesehen und auch nicht geeignet ist.

Aus WO 2022/158973 A1 ist ein gattungsgemäßes Mischorgan für einen Futtermischwagen bekannt. Das Mischorgan umfasst eine sich nach oben hin verjüngende Schneckenwindung, an dessen Außenrand Verschleißschutzelemente angebracht sind. Teilweise sind diese Verschleißschutzelemente zudem mit einer Schneide versehen und fungieren somit zusätzlich als Schneidmesser. Um die Verschleißschutzelemente an der Schneckenwindung anzubringen weisen, Verschleißschutzelemente und Schneckenwindungen miteinander koinzidierende Bohrungen auf. Die Bohrungen sind von einer ringförmigen Prägestruktur umgeben, die so dimensioniert ist, dass sie den Kopf einer Senkkopf-Schraube aufnehmen kann. Im Ergebnis ergibt sich so auf der Oberfläche einer mit den genannten Verschleißschutzelementen und/oder Schneidmessern ausgestatteten Mischschnecke eine weitgehend glatte Kontur, auf der das zu mischenden Futter widerstandsarm entlang gleiten kann. Nachteilig an diesem Mischorgan ist, dass die Herstellung relativ aufwendig und die Oberfläche lediglich weitgehend aber nicht vollständig glatt ist. Weiterhin ist es problematisch, dass die zur Befestigung der Verschleißelemente vorgesehenen Schrauben bzw. deren Köpfe sich auf der verschleißbehafteten Oberfläche (Förderseite) befinden und deshalb besonders hohem Verschleiß ausgesetzt sind. Somit werden die Schrauben einseitig stark geschwächt und hinsichtlich der Verbindung besteht eine erhöhte Bruchgefahr. Zudem können die Konturen der Schrauben, beispielsweise eine im Schraubenkopf vorgesehene Innensechskant-Kontur, soweit verschleißen, dass eine einfache Demontage oft nicht möglich ist. Dies insbesondere deshalb, weil die Schrauben in aller Regel keine Verdrehsicherung aufweisen. Abgebrochene Befestigungselemente und dadurch bedingt von der Mischschnecke abgelöste Verschleißelemente sind häufig scharfkantig. Gelangen solche Fremdkörper in die zu mischenden Futterration können sie Störungen und Folgeschäden an Futtermischwagen verursachen oder die zu fütternden Tiere verletzen.

Aufgabe der Erfindung ist es, die beschriebenen Nachteile zu beseitigen und ein Mischorgan oder eine Entnahmeeinrichtung mit Verschleißschutzelementen vorzuschlagen, bei dem die oben beschriebenen Nachteile beseitigt oder reduziert sind. Insbesondere soll die Erfindung den zum Antrieb des Mischorgans oder der Entnahmeeinrichtung erforderlichen Kraftbedarf reduzieren und eine kostengünstige und montagefreundliche Herstellung eines Mischorgans beziehungsweise einer Entnahmeeinrichtung ermöglichen.

Diese Aufgabe wird gelöst durch ein Mischorgan oder eine Entnahmeeinrichtung mit den Merkmalen des Anspruchs 1.

### Definitionen:

Unter einem Mischorgan wird ein in einem Behälter angeordnetes Bauteil verstanden, das mittels einen Antriebs um eine Drehachse in Rotation versetzt werden kann und im Arbeitseinsatz etwaige in den Behälter eingebrachte Komponenten miteinander vermischt. Ein Mischorgan kann beispielsweise in Form einer horizontalen oder vertikalen Mischschnecke oder in Form einer Mischhaspel ausgebildet sein.

Unter einem Biomasse-Mischer wird eine Einrichtung zum Mischen von Biomasse in einem Behälter verstanden. Bei der Biomasse kann es sich insbesondere um Tierfutter sowie Zusatzstoffe für Tierfutter oder um Feststoffe für eine Biogasanlage handeln. Ein Biomasse-Mischer weist wenigstens ein im Behälter angeordnetes Mischorgan auf.

Unter einem Verschleißschutzelement wird ein Bauteil verstanden, dass auf oder an einem Mischorgan und/oder einer Entnahmeeinrichtung anbringbar ist und das Mischorgan und/oder die Entnahmeeinrichtung vor Verschleiß schützt, indem es selbst anstelle der zu schützenden Oberfläche in Kontakt zum Mischgut tritt.

Bei dem erfindungsgemäßen Mischorgan tritt der durch das Mischgut bewirkte Verschleiß in dem Bereich auf, in dem das Mischorgan mit einem Verschleißschutzelement versehen ist und somit nicht am Mischorgan selbst. Da das Verschleißschutzelement vorzugsweise demontierbar ausgeführt ist, ist es bei Bedarf auswechselbar und verlängert die Lebensdauer des Mischorgans. Ist ein am Mischorgan montiertes Verschleißschutzelement an seiner nach außen gerichteten Kontur mit einer Schneide ausgestattet, fungiert es zusätzlich als Schneidmesser.

Analog dazu tritt bei der erfindungsgemäßen Entnahmeeinrichtung der Verschleiß nicht am Fräsgehäuse auf, sondern an dem vorgelagerten Verschleißschutzelement. Die Funktionsweise und Montage eines Verschleißschutzelementes wird nachfolgend für das Ausführungsbeispiel "Mischorgan" erläutert und ist hinsichtlich seiner Funktionsprinzipen auf das weitere Ausführungsbeispiel "Entnahmeeinrichtung" übertragbar.

Das erfindungsgemäße Mischorgan weist wenigstens ein Verschleißschutzelement und/oder ein Schneidmesser auf. Das Verschleißschutzelement, beziehungsweise das Schneidmesser, umfasst eine Verschleißschutzelement-Platte beziehungsweise eine Schneidmesser-Platte und wenigstens einen mit einer nicht lösbaren Verbindung, vorzugsweise einer Schweißverbindung, an der Platte angebrachten Stehbolzen. Um das Verschleißschutzelement bzw. das Schneidmesser demontierbar am Mischorgan anbringen zu können, ist am Mischorgan wenigstens eine Bohrung oder Aussparung zur Aufnahme des Stehbolzens vorgesehen. Das Verschleißschutzelement und/oder das Schneidmesser ist mittels seines Stehbolzens und einem zum Stehbolzen kompatiblen Befestigungsmittel am Mischorgan lösbar befestigt. Bei der lösbaren Befestigung kann es sich vorzugsweise um eine Mutter handeln, die auf das Ende des Stehbolzens aufgeschraubt wird.

Alternativ zu einem Stehbolzen könnte an der Platte des Verschleißschutzelementes auch eine Mutter angebracht sein. Dementsprechend wäre dann am Mischorgan eine zur Aufnahme der Mutter ausreichend große Bohrung vorzusehen. Die Befestigung am Mischorgan könnte mit einer geeigneten Schraube erfolgen, wobei gegebenenfalls eine Unterlegscheibe vorzusehen wäre, die sicherstellt, dass der Schraubenkopf mit darunter angeordneter Unterlegscheibe das Verschleißschutzelement am Mischorgan fixiert.

Vorzugsweise weist ein Verschleißschutzelement nicht nur einen, sondern mehrere Stehbolzen auf, die in entsprechende Bohrungen an der Schneckenwindung einsetzbar sind. Bei Verwendung eines Verschleißschutzelements mit mehreren Stehbolzen ist das auf der Schneckenwindung montierte Verschleißschutzelement in einer vordefinierten Position fixiert und zudem gegen Verdrehungen gesichert.

Bei der demontierbaren Anbringung von Verschleißschutzelementen und/oder Schneidmessern an Mischorganen handelt es sich um eine jahrzehntelang bekannte Technik. Alle als Stand der Technik bekannten Lösungen weisen jedoch miteinander koinzidierende Durchgangsbohrungen in Verschleißschutzelement und Mischorgan auf. Als Folge dessen weist die Oberfläche dieser Verschleißschutzelemente eine durch die Bohrung bedingte Unterbrechung auf, aus der ein Schraubenkopf je nach Art der verwendeten Schraube mehr oder weniger stark hervorsteht. Zwar kann dieser Überstand durch in die Verschleißschutzelemente eingebrachte Senklochbohrungen vermieden werden, jedoch bleibt es auch bei solchen Ausführungsformen bei der durch die Senklochbohrung bedingte Unterbrechung in der Oberfläche. Zudem weisen die in diesem Fall verwendeten Senkkopfschrauben in ihrem Kopfbereich einen Schlitz oder einen Innensechskant auf, um die Demontage der Schraubverbindung zu ermöglichen. Unter den rauen Einsatzbedingungen, den das Mischorgan im Arbeitseinsatz ausgesetzt ist, setzen sich diese Angriffspunkte für Werkzeuge leicht zu, werden beschädigt oder unterliegen analog zur übrigen Oberfläche des Verschleißschutzelementes dem Verschleiß. Die Demontage der Senkkopfschrauben wird hierdurch erschwert oder insgesamt verhindert.

Bei Verwendung der erfindungsgemäßen Verschleißschutzelemente oder Schneidmesser mit fest daran angebrachten, insbesondere verschweißten, Stehbolzen treten diese Probleme nicht auf. Zum einen befinden sich die Stehbolzen an der zum Mischorgan hin orientierten Seite der Verschleißschutzelemente, so dass die zum Mischgut weisende Seite der Verschleißschutzelemente nicht beeinträchtigt oder unterbrochen wird. Hierdurch wird der Gutsfluss optimiert und ein durch eine Oberflächenunterbrechung bedingter Reibungswiderstand wird gänzlich vermieden.

Zum anderen sind die Stehbolzen am Verschleißschutzelement fixiert. Im Gegensatz zu einer Durchgangsschraube muss der Schraubenkopf beim Lösen der Mutter somit nicht auf irgendeine Weise, beispielsweise mittels eines geeigneten Werkzeuges, gehalten werden. Es ist vielmehr ausreichend, die Mutter vom fixierten Stehbolzen abzuschrauben. Hierdurch erleichtert sich die Demontage wesentlich.

In einer bevorzugten Ausführungsform handelt es sich bei dem Mischorgan um eine Mischschnecke mit einem Zentralrohr und wenigstens einer Schneckenwindung. In Abhängigkeit davon, ob die Drehachse der Mischschnecke horizontal oder vertikal angeordnet ist, werden solche Mischschnecken als Horizontal- oder Vertikalschnecken bezeichnet. Unabhängig von der Förderrichtung wird das Mischgut von den Schneckenwindungen gefördert, wodurch sich insbesondere an den Außenkanten der Schneckenwindungen ein erhöhter Verschleiß ergibt. Um die Standzeit einer solchen Mischschnecke zu erhöhen ist es deshalb von Vorteil, insbesondere den äußeren Rand der Mischschnecken mit Verschleißschutzelementen auszustatten.

Ein Verschleißschutzelement und/oder Schneidmesser kann eine Außenkontur aufweisen, die an eine am Mischorgan vorgesehene Außenkontur angepasst ist. Bei Verschleißschutzelementen ohne Schneidfunktion kann vorgesehen sein, dass die Außenkonturen von Verschleißschutzelement und Mischorgan einander im montierten Zustand unmittelbar überlagern. Im Gegensatz dazu ist bei Verschleißschutzelementen mit einer Schneidfunktion, also bei Schneidmessern, ein Überstand der Schneidmesser-Schneide gegenüber dem Mischorgan vorgesehen. In beiden Fällen wird jedoch der äußere Rand des Mischorgans durch die Verschleißschutzelemente bzw. Schneidmesser vor Verschleiß geschützt.

Vorzugsweise weisen das Verschleißschutzelement und/oder das Schneidmesser sowie das Mischorgan aneinander angepasste Kontaktflächen auf. Hierdurch wird ein Spalt zwischen den Bauteilen vermieden und es wird verhindert, dass Mischgut sich in einem solchen Spalt festsetzt und zu Störungen oder erhöhtem Kraftbedarf beim Mischen führt.

Weiterhin kann vorgesehen sein, dass wenigstens zwei Verschleißschutzelemente und/oder Schneidmesser im montierten Zustand spaltlos aneinander anschließen. Vorzugsweise können alle aneinander angrenzenden Verschleißschutzelemente und/oder Schneidmesser spaltlos aneinander anschließen, so dass der Außenrand des Mischorgans insgesamt mit Verschleißschutzelementen und/oder Schneidmessern abgedeckt ist. Hierdurch wird somit einerseits der gesamte Schneckenaußenrand vor Verschleiß geschützt, andererseits werden Übergänge und Abstufungen zwischen den Verschleißschutzelementen und/oder Schneidmessern vermieden, wodurch der Gutsfluss des Mischguts verbessert und der Kraftbedarf zum Antrieb des Mischorgans reduziert wird.

In der Regel ist für das Durchmischen der in einen Biomasse-Mischer eingefüllten Mischgüter eine bestimmte Drehrichtung des Mischorgans vorgesehen. Diese für die Mischarbeit vorgesehene Drehrichtung des Mischorgans wird nachfolgend als Misch-Drehrichtung bezeichnet. Insbesondere bei einem solchen Mischorgan mit einer für den Mischeinsatz präferierten Misch-Drehrichtung kann vorgesehen sein, dass:
- ein in Mischdrehrichtung gesehen vorderes Verschleißschutzelement oder Schneidmesser eine hintere Kante aufweist,
- das in Mischdrehrichtung gesehen hintere Verschleißschutzelement oder Schneidmesser eine vordere Kante aufweist und
- die hintere Kante des vorderen Verschleißschutzelements oder Schneidmessers die vordere Kante des hinteren Verschleißschutzelements oder Schneidmessers übergreift.

Zwei Verschleißschutzelemente und/oder Schneidmesser grenzen somit nicht spaltlos aneinander, sondern überlappen einander schuppenartig. Hierdurch wird bei in Mischdrehrichtung rotierendem Mischorgan auf dem Mischorgan liegendes Mischgut widerstandsarm vom vorderen Verschleißschutzelement oder Schneidmesser auf das hintere Verschleißschutzelement oder Schneidmesser weitergeleitet.

In einer bevorzugten Ausführungsform kann die Kontaktfläche des Verschleißschutzelementes oder des Schneidmessers eine Markierung zur Kennzeichnung einer für die Anbringung des Stehbolzens vordefinierten Position aufweisen. Eine solche Markierung erleichtert die Herstellung von Verschleißschutzelement und/oder Schneidmesser, da die Positionierung nicht für jeden Stehbolzen einzeln ausgemessen werden muss. Die Anbringung der Markierung kann auf unterschiedliche Arten erfolgen, beispielsweise unter Einsatz einer geeigneten Markierungsvorrichtung. Insbesondere bevorzugt wird jedoch eine Anbringung der Markierung mittels einer modernen Blechbearbeitungsmaschine, beispielsweise einer Laser- oder Plasma-Schneidanlage. Der Fertigungsvorteil ergibt sich insbesondere deshalb, weil eine solche Maschine ohnehin zum Zuschneiden des Verschleißschutzelementes oder Schneidmessers aus einer Blechplatte geeignet und insofern lediglich ein minimaler Zusatzaufwand erforderlich ist, um beim Zuschneiden der Verschleißschutz- oder Schneidmesser-Platten auch die genannte Markierung anzubringen. Zudem ist die Genauigkeit der Markierungs-Positionierung bei Verwendung einer vorzugsweise computergesteuerten Blechbearbeitungsmaschine sehr hoch, so dass auch die Stehbolzen mit sehr hoher Präzision positioniert werden können und das spätere Einstecken der Stehbolzen in die am Mischorgan vorgesehenen Bohrungen problemlos ermöglicht wird.

In einer bevorzugten Ausführungsform überragt die zur Anbringung des Stehbolzens vorgesehene Markierung den Durchmesser des Stehbolzens. Beispielsweise kann ein kreuz- oder X-förmiges Zeichen als Markierung vorgesehen sein, bei dem die Schenkel eine Länge aufweisen, die beispielsweise 1mm bis 3mm größer ist, als der Durchmesser des Stehbolzens. Hierdurch wird insbesondere ein manuelles Ausrichten der aufzuschweißenden Stehbolzen erleichtert, da der Stehbolzen bei Vorhandensein einer den Stehbolzen insbesondere geringfügig überragenden Markierung sehr einfach auf das Zentrum der Markierung aufgesetzt und in alle Richtungen manuell feinjustiert werden kann.

Alternativ zu einer kreuz- oder X-förmigen Markierung kann als Markierung ein Kreis vorgesehen sein, dessen Durchmesser dem Durchmesser des Stehbolzens entspricht oder der etwas größer, vorzugsweise 0,1mm bis 3mm größer, ist als der Stehbolzen. Bei einer kreisförmigen Markierung ist eine visuelle Ausrichtung des Stehbolzens in dem genannten Markierungskreis nochmals vereinfacht.

Weiterhin kann vorgesehen sein, dass das Verschleißschutzelement eine oder mehrere Markierungen aufweist, die einen Rückschluss auf den Verschleißzustand des Verschleißschutzelementes ermöglichen. Die genannte Markierung bildet somit einen optischen Indikator für den Verschleiß des Verschleißschutzelementes. Erreicht der Verschleiß des Verschleißschutzelementes im Arbeitseinsatz eine vordefinierte Marke kann somit ein prophylaktischer Austausch der Verschleißschutzelemente erfolgen bevor der Verschleiß so groß geworden ist, das eine Bruchgefahr des Verschleißschutzelementes besteht.

Die Anbringung der genannten Markierung könnte beispielsweise im Rahmen der Vorfertigung bzw. dem Zuschneiden der Verschleißschutzelemente mechanisch oder auch thermisch erfolgen. Für die thermische Anbringung ist ein vorzugsweise hinsichtlich der Intensität und Eindringtiefe steuerbaren Plasmabrenner oder eines Lasers besonders geeignet.

Bei dem Ausführungsbeispiel "Mischorgan" kann weiterhin vorgesehen sein, dass sowohl ein Schneidmesser als auch ein Verschleißschutzelement mittels desselben Stehbolzens am Mischorgan angebracht sind. In diesem Fall weist entweder das Schneidmesser den Stehbolzen und das Verschleißschutzelement eine Bohrung für den Stehbolzen auf oder umgekehrt das Verschleißschutzelement den Stehbolzen und das Schneidmesser eine Bohrung für den Stehbolzen. Der an einem Bauteil befestigte Stehbolzen wird somit nicht nur durch die am Mischorgan vorgesehene Bohrung gesteckt, sondern auch durch die am anderen Bauteil vorgesehene Bohrung. Es ergeben sich somit drei sandwichartig übereinander angeordnete Lagen aus Verschleißschutzelement, Schneidmesser und Mischorgan. Beispielsweise kann vorgesehen sein, dass bei einer Vertikalmischschnecke der komplette Rand an der Oberseite der Schneckenwindung mit Verschleißschutzelementen ausgestattet ist und, je nach Anforderung, an der Unterseite der Schneckenwindung zusätzlich einige Schneidmesser angebraucht sind, deren Bohrungen mit den im Mischorgan vorgesehenen Bohrungen koinzidieren und die von den an den Verschleißschutzelementen angebrachten Stehbolzen gehalten werden.

Die erfindungsgemäße Aufgabe wird auch gelöst durch einen Biomasse-Mischer, beispielsweise Futtermischwagen, umfassend
- einen Mischbehälter mit einer Einfüllöffnung und einer Ausgabeöffnung,
- wenigstens ein im Mischbehälter angeordnetes und um eine Drehachse drehbares Mischorgan nach einem der Ansprüche 1 bis 10 und/oder eine Entnahmeeinrichtung (60) nach einem der Ansprüche 1 oder 7 bis 10 und
- eine Antriebsvorrichtung zum Antrieb des Mischorgans.

Weiterhin wird die erfindungsgemäße Aufgabe durch ein Verschleißschutzelement oder Schneidmesser für ein Mischorgan eines Biomasse-Mischers gelöst, bei dem
- das Verschleißschutzelement eine Verschleißschutzelement-Platte und wenigstens einen mit einer Schweißverbindung unlösbar an der Verschleißschutzelement-Platte angebrachten Stehbolzen aufweist oder
- das Schneidmesser eine Schneidmesser-Platte und wenigstens einen mit einer Schweißverbindung unlösbar an der Schneidmesser-Platte angebrachten Stehbolzen aufweist.

Solche mit einem, vorzugsweise mehreren, Stehbolzen ausgerüstete Verschleißschutzelemente oder Schneidmesser lassen sich kostengünstig herstellen, schützen das Schneidorgan vor Verschleiß und lassen sich bei Bedarf einfach austauschen. Zudem wird die erfindungsgemäße Aufgabe durch ein Verfahren zur Herstellung eines Verschleißschutzelementes oder eines Schneidmessers für ein Mischorgan eines Biomassemischers gelöst, bei dem die nachfolgenden Verfahrensschritte Anwendung finden:
- Bereitstellen einer Stahlplatte zur Herstellung einer Verschleißschutzelement-Platte oder einer Schneidmesser-Platte,
- Ausschneiden der Verschleißschutzelement-Platte oder der Schneidmesser-Platte aus der Stahlplatte,
- Kennzeichnen einer für die spätere Anbringung eines Stehbolzens vorgesehenen Position an der Verschleißschutzelement-Platte oder an der Schneidmesser-Platte durch Anbringen einer Markierung,
- Anordnen des Stehbolzens auf der an der Verschleißschutzelement-Platte oder der Schneidmesser-Platte angebrachten Markierung,
- Verschweißen des Stehbolzens mit der Verschleißschutzelement-Platte oder mit der Schneidmesser-Platte zu einer Schweißbaugruppe.

Vorzugsweise wird das erfindungsgemäße Verfahren unter Verwendung einer computergesteuerten Zuschneidemaschine realisiert. Hierbei kann es sich beispielsweise um eine Laser- oder Plasmaschneidmaschine handeln. Solche Maschinen weisen in aller Regel Steuerungsprogramme und/oder Werkzeuge auf, mittels derer die Anbringung einer Markierung auf der zuzuschneidenden oder zugeschnittenen Stahlplatte ermöglicht wird. Somit kann in einer einzigen Aufspannung eine mit einer Markierung versehene Verschleißschutzelement- oder Schneidmesser-Platte hergestellt werden. Selbstverständlich können in Abhängigkeit von der Stahlplattengröße auch eine Vielzahl von Verschleißschutzelement- und/oder Schneidmesser-Platten hergestellt und dabei an beliebigen Stellen Bohrungen und/oder Markierungen eingebracht werden.

Weitere, die Erfindung verbessernde Maßnahmen, werden nachstehend mit der Beschreibung von bevorzugten Ausführungsbeispielen der Erfindung anhand der Figuren näher dargestellt.

Die Figuren zeigen:
- Fig. 1: zeigt einen Futtermischwagen mit zwei Vertikalschnecken in einer perspektivischen Seitenansicht;
- Fig. 2: zeigt eine der Vertikalschnecken des Futtermischwagens gemäß Fig. 1;
- Fig. 3: zeigt einen Ausschnitt aus Fig. 2;
- Fig. 4: zeigt den unteren Bereich einer Vertikalschnecke;
- Fig. 5: zeigt eine erste Ausführungsform eines Verschleißschutzelementes in einer perspektivischen Ansicht von schräg unten;
- Fig. 6: zeigt das Verschleißschutzelement gemäß Fig. 5 in einer perspektivischen Ansicht von schräg oben;
- Fig. 7: zeigt eine zweite Ausführungsform eines Verschleißschutzelementes in einer perspektivischen Ansicht von schräg oben;
- Fig. 8: zeigt das Verschleißschutzelement gemäß Fig. 7 in einer perspektivischen Ansicht von schräg unten;
- Fig. 9: zeigt einen Futtermischwagen mit einer Entnahmeeinrichtung;
- Fig. 10: zeigt eine Seitenansicht einer Entnahmeeinrichtung in einer Schnittdarstellung;
- Fig. 11: zeigt ein Verschleißelement für die Entnahmeeinrichtung in einger perspektivischen Darstellung;
- Fig. 12: zeigt das Verschleißelement gemäß Fig 11 in einer Seitenansicht.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung eines Futtermischwagens und seiner Komponenten im Betriebsmodus.

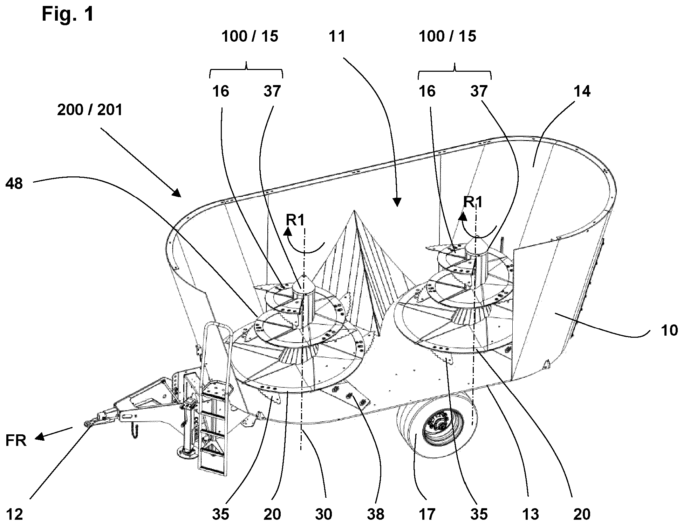

Figur 1 zeigt einen Biomasse-Mischer 200 in Form eines Futtermischwagens 201 mit einem Mischbehälter 10 und zwei darin angeordneten Mischorganen 100 in Form vertikaler Mischschnecken 15. Der Futtermischwagen 201 ist somit eine beispielhafte Ausführungsform eines Biomassemischers 200, so wie auch die Mischschnecken 15 als beispielhafte Ausführungen von Mischorganen 100 zu verstehen sind.

Der Futtermischwagen 201 hat ein Fahrwerk 17 und ist mit einer Anhängevorrichtung 12 an eine Zugmaschine, beispielsweise einen Traktor (nicht dargestellt) koppelbar. Der Mischbehälter 10 umfasst einen Boden 13 und eine Wand 14. Der Mischbehälter 10 ist nach oben hin offen wodurch eine Einfüllöffnung 11 ausgebildet ist. Zu mischende Futterkomponenten sind somit durch die Einfüllöffnung 11 von oben in den Mischbehälter 10 einfüllbar. In den Mischbehälter 10 eingebrachte Futterkomponenten werden von den Mischschnecken 15 zu einer homogenen Futtermasse vermischt und sind im Anschluss daran durch eine Ausgabeöffnung (nicht dargestellt) ausbringbar.

Die Wand 14 des Mischbehälters 10 ist unterbrochen dargestellt, so dass die im dargestellten Ausführungsbeispiel gleich konfigurierten Mischschnecken 15 gut zu erkennen sind. Beide Mischschnecken 15 weisen ein Zentralrohr 37 und eine daran angebrachte Schneckenwindung 16 auf. Im dargestellten Ausführungsbeispiel umfassen die Mischschnecken 15 zudem einen Räumarm 38. Die Mischschnecken 15 werden von einer teilweise unterhalb des Mischbehälters 10 und teilweise innerhalb des Zentralrohrs 37 angeordneten Antriebseinrichtung (in Fig. 1 nicht sichtbar) angetrieben. Im Arbeitseinsatz rotieren die Mischschnecken 15 in Mischdrehrichtung R1 um Drehachsen 30 und durchmischen die in den Mischbehälter 10 eingefüllten Futterkomponenten.

Die Mischschnecken 15 weisen einen Außenrand 48 auf, der im dargestellten Ausführungsbeispiel komplett mit Verschleißschutzelementen 20 bestückt ist. Zudem sind an der Schneckenwindung 16 einige Schneidmesser 35 angebracht, die zur Zerkleinerung der in den Mischbehälter 10 eingefüllten Futterkomponenten dienen.

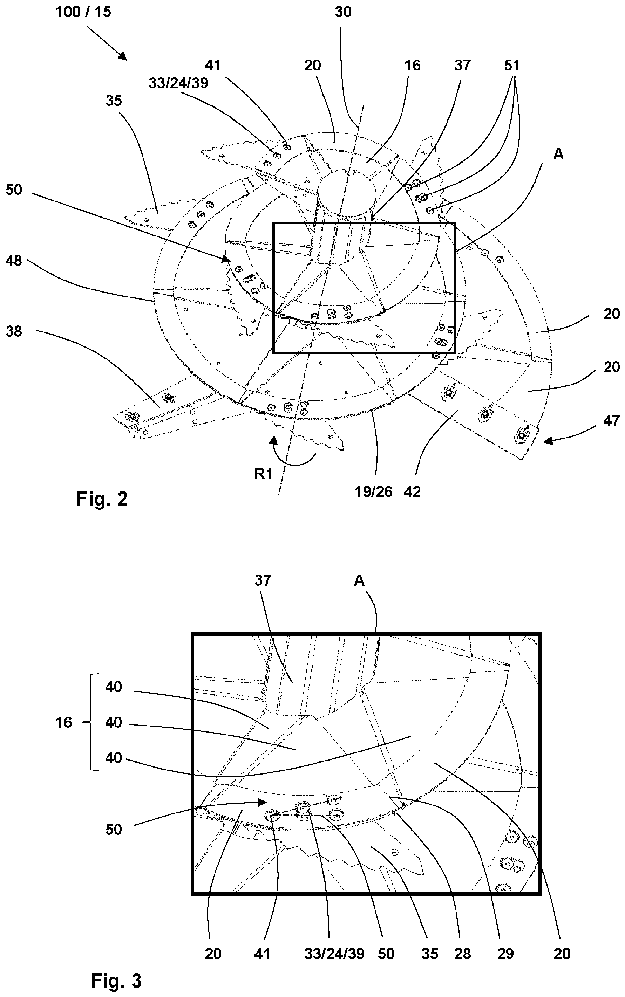

Fig. 2 zeigt eines der in Fig. 1 dargestellten Mischorgane 100 in einer perspektivischen Ansicht von schräg oben. Im dargestellten Ausführungsbeispiel ist die Schneckenwindung 16 aus gekanteten Schneckenwindungsabschnitten 40 zusammengesetzt (vgl. Fig. 3). Die gekanteten und miteinander verschweißten Schneckenwindungsabschnitte 40 bilden gemeinsam die Schneckenwindung 16 der sich nach oben kegelförmig verjüngenden vertikalen Mischschnecke 15 aus.

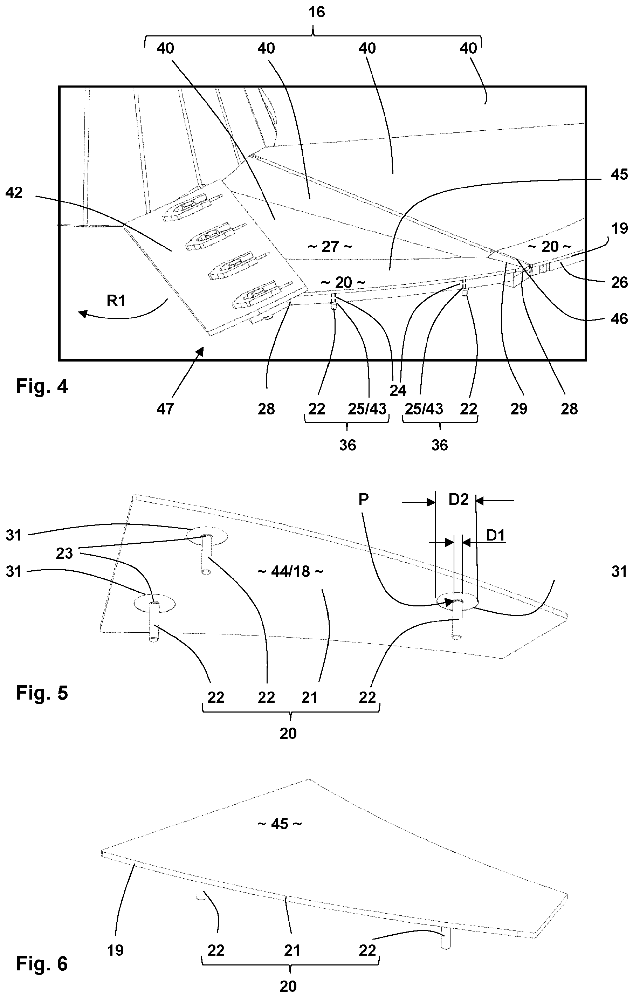

Die Schneckenwindung 16 weist ein unteres Ende 47 auf, an dem eine Räumplatte 42 angebracht ist. Wie bereits erwähnt ist der Außenrand 48 der Schneckenwindung 16 komplett mit Verschleißschutzelementen 20 bestückt. Ein erstes Verschleißschutzelement 20, das in den Fig. 5 und 6 im Detail dargestellt ist, ist so an der Schneckenwindung 16 angebracht, dass es die Räumplatte 42 mit seiner vorderen Kante 28 untergreift (vgl. Fig. 4). Das erste Verschleißschutzelement 20 ist an seiner Vorderkante 28 breiter als die nachfolgenden Verschleißschutzelemente 20, um dem in diesem Bereich erfahrungsgemäß erhöhten Verschleiß an der Schneckenwindung 16 entgegenzuwirken. Da es sich bei dem dargestellten Ausführungsbeispiel um eine sich kegelförmig nach oben verjüngende Mischschnecke 15 handelt und die Verschleißschutzelemente 20 an die Kontur der Mischschnecke 15 angepasst sind, ist die Verwendung gleicher und untereinander austauschbarer Verschleißschutzelemente 20 bei diesem Ausführungsbeispiel nicht möglich. Die Verschleißschutzelemente 20 sind vielmehr hinsichtlich ihrer Radien und Außenkontur an den Bereich des Außenrandes 48 angepasst, an den sie montiert sind.

Die Verschleißschutzelemente 20 umfassen eine Verschleißschutzelement-Platte 21 und daran angebrachte, im dargestellten Ausführungsbeispiel mit einer Schweißverbindung 23 versehene Stehbolzen 22. Zur Befestigung der Verschleißschutzelemente 20 an der Schneckenwindung 16 sind in der Schneckenwindung 16 Bohrungen 24 vorgesehen, die mit den Stehbolzen 22 korrespondieren und eine jeweils gewünschte Montageposition für die Verschleißschutzelemente 20 definieren.

Die im dargestellten Ausführungsbeispiel vorgesehenen Verschleißschutzelemente 20 überragen die Schneckenwindung 16 nicht und haben auch keine Schneide. Grundsätzlich ist es jedoch auch möglich, die Verschleißschutzelemente 20 mit einer im montierten Zustand nach außen weisenden Schneide auszurüsten und so zu montieren, dass der Bereich der Schneide die Schneckenwindung 16 überragt.

Im dargestellten Ausführungsbeispiel sind am Mischorgan 100 zusätzlich zu den Verschleißschutzelementen 20 Schneidmesser 35 vorgesehen. Um die Schneidmesser 35 wahlweise in unterschiedlichen Schwenkpositionen an der Schneckenwindung 16 anbringen zu können, kann ein V-förmiges Lochbild 50 vorgesehen sein. Die Bohrungen des V-förmigen Lochbildes 50 durchdringen sowohl die auf der Oberseite der Schneckenwindung 16 angebrauchten Verschleißschutzelementen 20 als auch die Schneckenwindung 16, so dass sich ein mit einer Reihe von Bohrungen 39, im abgebildeten Fall drei Bohrungen 39, versehenes Schneidmesser 35 in zwei unterschiedlichen Schwenkpositionen an der Schneckenwindung 16 montieren lässt.

Im dargestellten Ausführungsbeispiel sind alle Schneidmesser 35 mit einer Schrauben-Mutterverbindung 51 an der Unterseite der Schneckenwindung 16 angebracht. Die Schrauben-Mutterverbindung 51 wird gebildet durch Senkkopfschrauben 41, die durch miteinander koinzidierenden Bohrungen 33, 24 und 39 von Verschleißschutzelement 20, Schneckenwindung 16 und Schneidmesser 35 gesteckt sind und von einer darunterliegenden Mutter gehalten werden. An Stelle der genannten Schrauben-Mutterverbindung 51 könnte jedoch auch die Anbringung von Stehbolzen 22 an der Unterseite der entsprechenden Verschleißschutzelemente 20 vorgesehen sein. In diesem Fall würden also die Verschleißschutzelemente 20 mit den Stehbolzen 22 durch die in Schneckenwindung 16 und Schneidmesser 35 vorgesehenen Bohrungen 24 und 39 gesteckt und mit einer Mutter fixiert werden.

Fig. 3 zeigt einen Ausschnitt A aus Fig. 2 in einer vergrößerten Darstellung. Bei den Schneckenwindungsabschnitten 40 handelt es sich im dargestellten Ausführungsbeispiel um plattenförmige Abschnitte mit jeweils einer Abkantung und zwei ebenen Abschnitten. Die Schneckenwindungsabschnitte 40 sind hintereinander angeordnet und bilden gemeinsam die Schneckenwindung 16 aus. An Stelle einer aus einer Vielzahl von ebenen Flächen zusammengesetzten Schneckenwindung 16 könnte auch eine gewalzte oder gedrückte Schneckenwindung oder ein ganz anderes Mischorgan, beispielsweise eine Haspel, vorgesehen sein. Allen erfindungsgemäßen Ausführungen gemeinsam ist jedoch, dass starkem Verschleiß unterliegende Bereiche des Mischorgans 100 mit wenigstens einem Verschleißschutzelement versehen sind, welches mit am Verschleißschutzelement 20 vorgesehenen Stehbolzen 22 am Mischorgan 100 befestigt ist.

Fig. 4 zeigt das untere Ende 47 einer vertikalen Mischschnecke 15 in einer vergrößerten Darstellung. Es ist zu erkennen, dass die in Drehrichtung R1 gesehen hintereinander angeordneten Verschleißschutzelemente 20 einander schuppenartig untergreifen. Das vorderste Verschleißschutzelement 20 untergreift mit seiner Vorderkante 28 die Räumplatte 42. Das sich an das vorderste Verschleißschutzelement 20 anschließende Verschleißschutzelement 20 untergreift mit seiner Vorderkante 28 die Hinterkante 29 des davor liegenden Verschleißschutzelementes 20. Analog zu den Schneckenwindungsabschnitten 40 weisen auch die Verschleißschutzelemente 20 ebene Flächen auf, wobei im dargestellten Ausführungsbeispiel mit Ausnahme des vordersten Verschleißschutzelementes 20 alle nachfolgenden Verschleißschutzelemente 20 zwei ebene Flächen und eine dazwischen liegende Abkantung 46 aufweisen.

In Fig. 4 sind weiterhin die am Verschleißschutzelement 20 vorgesehenen Stehbolzen 22 sowie die zur Fixierung des Verschleißschutzelementes 20 vorgesehenen Muttern 43 zu erkennen. Im montierten Zustand sind die Stehbolzen 22 durch die im Mischorgan 100 vorgesehen Bohrungen 24 gesteckt und mit Befestigungsmitteln 25 am Mischorgan 100 fixiert. Bei den Befestigungsmitteln 25 handelt es sich im dargestellten Ausführungsbeispiel um Muttern 43, die gemeinsam mit den Stehbolzen 22 eine Schraubverbindung 36 bilden. Im Gegensatz zu aus dem Stand der Technik bekannten Befestigungen weist das Verschleißschutzelement 20 somit an seiner Oberseite 45 keine durch eingebrachte Bohrungen bedingte Unterbrechung auf.

Die Figuren 5 und 6 zeigen eine erste Ausführungsform eines Verschleißschutzelementes 20 in einer perspektivischen Ansicht von schräg unten beziehungsweise schräg oben. Diese erste Ausführungsform des Verschleißschutzelementes 20 kommt bei dem in den Figuren 1 bis 4 ersichtlichen Mischorganen 100 als vorderstes, an die Räumplatte 42 angrenzendes Verschleißschutzelement 20 zum Einsatz. In der Ansicht von unten (Fig. 5) sind an der Verschleißschutzelement-Platte 21 eingebrachte Markierungen 31 zu erkennen. Diese Markierungen 31 sind zunächst in den Rohling der Verschleißschutzelement-Platte 21 eingebracht worden. Sie erleichtern in einem Vorfertigungsarbeitsschritt die Ausrichtung eines Stehbolzens 22 in einer vordefinierten Position P auf der Verschleißschutzelement-Platte 21 und somit die Herstellung einer aus Verschleißschutzelement-Platte 21 und Stehbolzen 22 umfassenden Schweißbaugruppe.

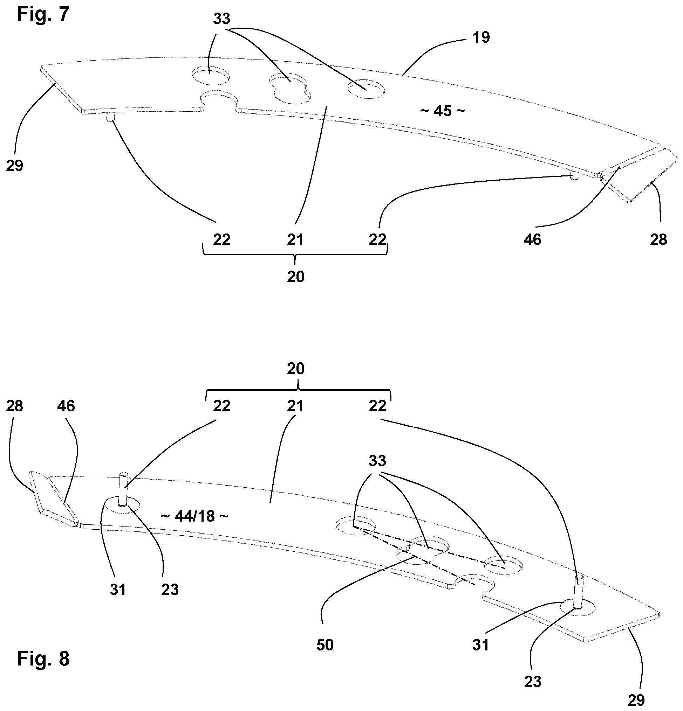

Die Figuren 7 und 8 zeigen eine zweite Ausführungsform eines Verschleißschutzelementes 20 in einer perspektivischen Ansicht von schräg unten beziehungsweise schräg oben. Zusätzlich zu den Stehbolzen 22 ist das durch Bohrungen 33 gebildete V-förmige Lochbild 50 zu erkennen. Wie bereits weiter oben erwähnt könnte an Stelle der Bohrungen 33 zur Befestigung eines Schneidmessers 35 auch Stehbolzen 22 vorgesehen sein. Da das Verschleißschutzelement 20 jedoch in einer den Außenrand 48 schützenden Position auf der Schneckenwindung 16 fixiert und nicht schwenkbar sein soll, könnte in einem solchen Fall am Schneidmesser 35 ein V-förmiges Lochbild 50 angebracht sein, um bei fixierter Position des Verschleißschutzelementes 20 das Schneidmesser 35 gegenüber der Schneckenwindung 16 in unterschiedlichen Schwenkpositionen anbringen zu können.

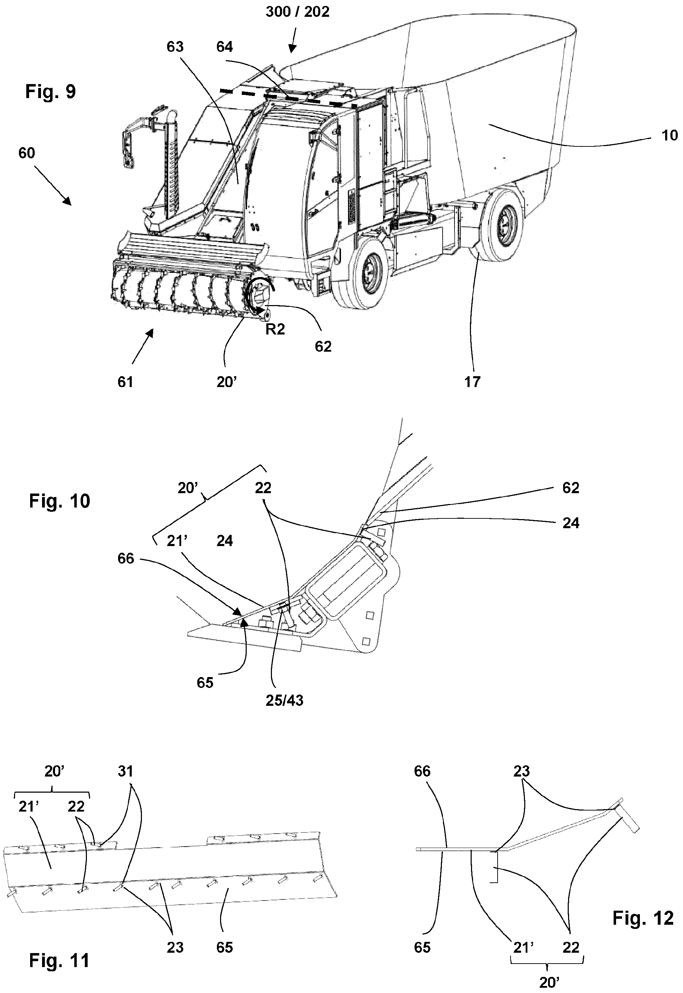

Fig. 9 zeigt einen Biomasse-Mischer 300 in Form eines Futtermischwagens 202 mit einer Entnahmeeinrichtung 60. Die Entnahmeeinrichtung 60 umfasst eine in einem Gehäuse 62 angeordnete Fräse 61 sowie einen an die Fräse 61 anschließenden Förderarm 63. Der Förderarm 63 ist um eine Drehachse 64 schwenkbar.

Im Arbeitseinsatz löst die in Fräsdrehrichtung R2 rotierende Fräse 61 in einem Vorratslager (nicht dargestellt) befindliche Biomasse und fördert diese einem im Förderarm 63 angeordneten Förderband zu. Dabei wird die Biomasse durch einen zwischen Fräse 61 und Fräsgehäuse 62 ausgebildeten Spalt eingezogen. Folglich reibt die Biomasse an der innen liegenden Wand des Fräsgehäuses 62. Damit der hieraus resultierende Verschließ nicht unmittelbar an der Wand des Fräsgehäuses 62 auftritt ist dieser Wand ein Verschließschutzelement 20' vorgelagert.

Fig. 10 zeigt einen Teilbereich einer Entnahmeeinrichtung 60 in einer geschnittenen Seitenansicht mit Blick auf das Verschleißschutzelement 20'. Das Verschleißschutzelement 20' umfasst eine Verschleißschutzelement-Platte 21' und daran angeschweißte Stehbolzen 22. Im dargestellten Ausführungsbeispiel handelt es sich bei der Verschleißschutzelement-Platte 21' um ein mehrfach gekantetes Blech, welches in den Figuren 11 und 12 freigestellt in einer perspektivischen Ansicht und in einer Seitenansicht dargestellt ist. Zu erkennen ist, dass die Stehbolzen 23 an der Unterseite 65 der Verschleißschutzelement-Platte 21' angebracht sind.

Im Gegensatz zu den als Stand der Technik bekannten Lösungen weist das so ausgeführte Verschleißschutzelement 20' somit keine Durchgangsbohrungen und in diese hineingesteckte Schrauben auf. Das Verschleißschutzelement 20', beziehungsweise dessen Verschleißschutzelement-Platte 21', hat vielmehr eine Oberseite 66 ohne störende Kanten oder vorspringende Schraubköpfe. Hierdurch reduziert sich zum einen der Widerstand beim Fördern der Biomasse. Zum anderen vereinfacht sich die Montage, da bei der Demontage keine Schrauben gelöst werden müssen, deren Köpfe durch Verschleißerscheinungen beschädigt oder zerstört sind.

Die für die Demontage der Verschleißschutzelemente 20' zu lösenden Muttern 43 sind von der Außenseite des Fräsgehäuses 62 her zugänglich und damit in einem Bereich angeordnet, an dem kein Verschleiß durch die das Fräsgehäuse 62 durchströmende Biomasse auftritt.

### Bezugszeichenliste

- 10: Mischbehälter
- 11: Einfüllöffnung
- 12: Anhängevorrichtung
- 13: Boden (von 10)
- 14: Wand (von 10)
- 15: Mischschnecke
- 16: Schneckenwindung
- 17: Fahrwerk
- 18: Kontaktfläche (von 20)
- 19: Außenkontur (von 20)
- 20, 20': Verschleißschutzelement
- 21, 21': Verschleißschutzelement-Platte
- 22: Stehbolzen
- 23: Schweißverbindung
- 24: Bohrung (in 100)
- 25: Befestigungsmittel
- 26: Außenkontur (von 100)
- 27: Kontaktfläche (von 100)
- 28: vordere Kante (von 20)
- 29: hintere Kante (von 20)
- 30: Drehachse (von 100)
- 31: Markierung
- 32: Kreis
- 33: Bohrung (in 20)
- 34: -
- 35: Schneidmesser
- 36: Schraubverbindung
- 37: Zentralrohr (von 100)
- 38: Räumarm
- 39: Bohrung (in 16 und 20)
- 40: Schneckenwindungsabschnitt
- 41: Senkkopfschraube
- 42: Räumplatte
- 43: Mutter
- 44: Unterseite (von 20)
- 45: Oberseite (von 20)
- 46: Abkantung
- 47: unteres Ende (von 16)
- 48: Außenrand (von 16)
- 49: -
- 50: Lochbild (V-förmig)
- 51: Schrauben-Mutter-Verbindung
- 60: Entnahmeeinrichtung
- 61: Fräse
- 62: Fräsgehäuse
- 63: Förderarm
- 64: Drehachse (von 63)
- 65: Unterseite (von 21')
- 66: Oberseite (von 21')

- 100: Mischorgan
- 200: Biomasse-Mischer
- 300: Biomasse-Mischer
- 201: Futtermischwagen
- 202: Futtermischwagen

- A: Ansicht
- D1: Durchmesser (von 22)
- D2: Durchmesser (von 31)
- FR: Fahrtrichtung
- P: Position
- R1: Mischdrehrichtung (von 100)
- R2: Fräsdrehrichtung

## Patentansprüche

1. Mischorgan (100) oder Entnahmeeinrichtung (60) zur Verwendung in einem Biomasse-Mischer (200, 300), mit wenigstens einem daran angebrachten Verschleißschutzelement (20, 20') und/oder Schneidmesser (35),
**dadurch gekennzeichnet, dass**
- das Verschleißschutzelement (20, 20') und/oder das Schneidmesser (35) eine Verschleißschutzelement-Platte (21, 21') und einen mit einer nicht lösbaren Schweißverbindung (23), an der Verschleißschutzelement-Platte (21, 21') angebrachten Stehbolzen (22) umfasst,
- das Mischorgan (100) oder die Entnahmeeinrichtung (60) eine Bohrung (24) oder Aussparung zur Aufnahme des Stehbolzens (22) umfasst und
- das Verschleißschutzelement (20, 20') und/oder Schneidmesser (35) mittels seines Stehbolzens (22) und einem zum Stehbolzen (22) kompatiblen Befestigungsmittel (25) am Mischorgan (100) oder an der Entnahmeeinrichtung (60) lösbar befestigt ist.

2. Mischorgan (100) nach Anspruch 1, **dadurch gekennzeichnet, dass** es sich bei dem Mischorgan (100) um eine Mischschnecke (15) mit einem Zentralrohr (37) und wenigstens einer Schneckenwindung (16) handelt.

3. Mischorgan (100) nach Anspruch 1 oder 2, **dadurch gekennzeichnet, dass** das Verschleißschutzelement (20) und/oder Schneidmesser (35) eine Außenkontur (19) und das Mischorgan (100) eine Außenkontur (26) aufweist und die Außenkonturen (19, 26) von Verschleißschutzelement (20) und Mischorgan (100) aneinander angepasst sind.

4. Mischorgan (100) nach einem der Ansprüche 1 bis 3, **dadurch gekennzeichnet, dass** das Verschleißschutzelement (20) und/oder das Schneidmesser (35) eine Kontaktfläche (18) und das Mischorgan (100) eine Kontaktfläche (27) aufweist und die Kontaktflächen (18, 27) von Verschleißschutzelement (20) und Mischorgan (100) aneinander angepasst sind.

5. Mischorgan (100) nach einem der Ansprüche 1 bis 4, **dadurch gekennzeichnet, dass** wenigstens zwei Verschleißschutzelemente (20) und/oder Schneidmesser (35) vorgesehen sind und aneinander angrenzende Verschleißschutzelemente (20) und/oder Schneidmesser (35) im montierten Zustand spaltlos aneinander anschließen.

6. Mischorgan (100) nach einem der Ansprüche 1 bis 5, **dadurch gekennzeichnet, dass** das Mischorgan (100) eine Drehachse (30) aufweist, um die es im Arbeitseinsatz in einer Mischdrehrichtung (R1) rotiert und:
- das in Drehrichtung (R1) gesehen vordere Verschleißschutzelement (20) oder Schneidmesser (35) eine hintere Kante (29) aufweist,
- das in Drehrichtung (R1) gesehen hintere Verschleißschutzelement (20) oder Schneidmesser (35) eine vordere Kante (28) aufweist und
- die hintere Kante (29) des vorderen Verschleißschutzelements (20) oder Schneidmessers (35) die vordere Kante (28) des hinteren Verschleißschutzelements (20) oder Schneidmessers (35) übergreift
so dass bei in Mischdrehrichtung (R1) rotierendem Mischorgan (100) auf dem Mischorgan (100) liegendes Mischgut widerstandsarm vom vorderen Verschleißschutzelement (20) oder Schneidmesser (35) auf das hintere Verschleißschutzelement (20) oder Schneidmesser (35) weitergeleitet wird.

7. Mischorgan (100) nach einem der Ansprüche 1 bis 6 oder Entnahmeeinrichtung (60) nach Anspruch 1, **dadurch gekennzeichnet, dass** die Kontaktfläche (18) des Verschleißschutzelementes (20, 20') oder des Schneidmessers (35) eine Markierung (31) zur Kennzeichnung einer für die Anbringung des Stehbolzens (22) vordefinierten Position (P) aufweist.

8. Mischorgan (100) oder Entnahmeeinrichtung (60) nach Anspruch 7, **dadurch gekennzeichnet, dass** der Stehbolzen (22) einen Durchmesser (D1) aufweist und die zur Anbringung des Stehbolzens (22) vorgesehene Markierung (31) den Durchmesser (D1) überragt.

9. Mischorgan (100) oder Entnahmeeinrichtung (60) nach Anspruch 7 oder 8, **dadurch gekennzeichnet, dass** als Markierung (31) ein Kreis (32) mit einen Durchmesser (D2) vorgesehen ist, der gleichgroß oder größer als der Durchmesser (D1) des Stehbolzens (22) ist.

10. Mischorgan (100) nach einem der Ansprüche 1 bis 9 oder Entnahmeeinrichtung (60) nach Anspruch 1, 7, 8, oder 9, **dadurch gekennzeichnet, dass** das Verschleißschutzelement (20, 20') eine oder mehrere Markierungen aufweist, die den Verschleißzustand des Verschleißschutzelementes (20) anzeigt.

11. Mischorgan (100) nach einem der Ansprüche 1 bis 10, **dadurch gekennzeichnet, dass** sowohl ein Schneidmesser (35) als auch ein Verschleißschutzelement (20) mittels desselben Stehbolzens (22) am Mischorgan (100) angebracht sind, wobei entweder das Schneidmesser (35) den Stehbolzen (22) und das Verschleißschutzelement (20) eine Bohrung (33) aufweist oder umgekehrt das Schneidmesser (35) eine Bohrung (39) und das Verschleißschutzelement (20) den Stehbolzen (22) aufweist, so dass die drei Bauteile Schneidmesser (35), Verschleißschutzelement (20) und Mischorgan (100) mittels desselben Stehbolzens (22) fixiert sind.

12. Biomasse-Mischer (200, 300), beispielsweise Futtermischwagen (201, 202), umfassend
- einen Mischbehälter (10) mit einer Einfüllöffnung (11) und einer Ausgabeöffnung,
- wenigstens ein im Mischbehälter (10) angeordnetes und um eine Drehachse (30) drehbares Mischorgan (100) nach einem der Ansprüche 1 bis 11 und/oder eine Entnahmeeinrichtung (60) nach einem der Ansprüche 1 oder 7 bis 10 und
- eine Antriebsvorrichtung zum Antrieb des Mischorgans (100).

13. Verschleißschutzelement (20, 20') oder Schneidmesser (35) für ein Mischorgan (100) eines Biomasse-Mischers (200, 300), beispielsweise eines Futtermischwagens (201, 202), **dadurch gekennzeichnet, dass**:
- das Verschleißschutzelement (20, 20') eine Verschleißschutzelement-Platte (21, 21') und wenigstens einen mit einer Schweißverbindung unlösbar an der Verschleißschutzelement-Platte (21, 21') angebrachten Stehbolzen (22) aufweist oder
- das Schneidmesser (35) eine Schneidmesser-Platte und wenigstens einen mit einer Schweißverbindung unlösbar an der Schneidmesser-Platte angebrachten Stehbolzen (22) aufweist.

14. Verfahren zur Herstellung eines Verschleißschutzelementes (20, 20') oder eines Schneidmessers (35) für ein Mischorgan (100) eines Biomassemischers (200, 300) **gekennzeichnet durch** die nachfolgenden Verfahrensschritte:
- Bereitstellen einer Stahlplatte zur Herstellung einer Verschleißschutzelement-Platte (21, 21') oder einer Schneidmesser-Platte,
- Ausschneiden der Verschleißschutzelement-Platte (21, 21') oder der Schneidmesser-Platte aus der Stahlplatte,
- Kennzeichnen einer für die spätere Anbringung eines Stehbolzens (22) vorgesehenen Position (P) an der Verschleißschutzelement-Platte (21, 21') oder an der Schneidmesser-Platte durch eine Markierung (31),
- Anordnen des Stehbolzens (22) auf der an der Verschleißschutzelement-Platte (21, 21') oder der Schneidmesser-Platte angebrachten Markierung (31),
- Verschweißen des Stehbolzens (22) mit der Verschleißschutzelement-Platte (21, 21') oder der Schneidmesser-Platte zu einer Schweißbaugruppe.

## Claims

1. Mixing organ (100) or discharge device (60) for use in a biomass mixer (200, 300), comprising at least one wear protection element (20, 20') and/or cutting blade (35) mounted thereon,
**characterised in that**
- the wear protection element (20, 20') and/or the cutting blade (35) comprises a wear protection element plate (21, 21') and a stud bolt (22) attached to the wear protection element plate (21, 21') by means of a non-detachable welded joint (23),
- the mixing organ (100) or the discharge device (60) comprises a bore (24) or recess for receiving the stud bolt (22); and
- the wear protection element (20, 20') and/or cutting blade (35) is detachably secured to the mixing organ (100) or the discharge device (60) by means of its stud bolt (22) and a fastening device (25) compatible with the stud bolt (22).

2. Mixing organ (100) according to claim 1, **characterised in that** the mixing organ (100) is a mixing screw (15) with a central pipe (37) and at least one screw winding (16).

3. Mixing organ (100) according to claim 1 or 2, **characterised in that** the wear protection element (20) and/or cutting blade (35) has an outer contour (19) and the mixing organ (100) has an outer contour (26), and the outer contours (19, 26) of wear protection element (20) and mixing organ (100) are matched to one another.

4. Mixing organ (100) according to any one of claims 1 to 3, **characterised in that** the wear protection element (20) and/or the cutting blade (35) has a contact surface (18) and the mixing organ (100) has a contact surface (27), and the contact surfaces (18, 27) of the wear protection element (20) and the mixing organ (100) are adapted to one another.

5. Mixing organ (100) according to any one of claims 1 to 4, **characterised in that** at least two wear protection elements (20) and/or cutting blades (35) are provided, and adjacent wear protection elements (20) and/or cutting blades (35) fit together seamlessly in assembled state.

6. Mixing organ (100) according to any one of claims 1 to 5, **characterised in that** the mixing organ (100) has an axis of rotation (30) about which it rotates in a mixing direction of rotation (R1) during operation, and:
- the front wear protection element (20) or cutting blade (35), as viewed in the direction of rotation (R1), has a rear edge (29),
- the rear wear protection element (20) or cutting blade (35), as viewed in the direction of rotation (R1), has a front edge (28), and
- the rear edge (29) of the front wear protection element (20) or cutting blade (35) overlaps the front edge (28) of the rear wear protection element (20) or cutting blade (35),
so that, when the mixing organ (100) is rotating in the mixing direction (R1), the material to be mixed lying on the mixing organ (100) is transferred with minimal resistance from the front wear protection element (20) or cutting blade (35) to the rear wear protection element (20) or cutting blade (35).

7. Mixing organ (100) according to any one of claims 1 to 6, or discharge device (60) according to claim 1, **characterised in that** the contact surface (18) of the wear protection element (20, 20') or the cutting blade (35) has a marking (31) for indicating a predefined position (P) for the mounting of the stud bolt (22).

8. Mixing organ (100) or discharge device (60) according to claim 7, **characterised in that** the stud bolt (22) has a diameter (D1) and the marking (31) provided for mounting the stud bolt (22) extends beyond the diameter (D1).

9. Mixing organ (100) or discharge device (60) according to claim 7 or 8, **characterised in that** provided as the marking (31) is a circle (32) with a diameter (D2) which is equal to or greater than the diameter (D1) of the stud bolt (22).

10. Mixing organ (100) according to any one of claims 1 to 9, or a discharge device (60) according to claim 1, 7, 8, or 9, **characterised in that** the wear protection element (20, 20') has one or more markings, which indicate the state of wear of the wear protection element (20).

11. Mixing organ (100) according to any one of claims 1 to 10, **characterised in that** both a cutting blade (35) and a wear protection element (20) are mounted on the mixing organ (100) by means of the same stud bolt (22), wherein either the cutting blade (35) comprises the stud bolt (22) and the wear protection element (20) comprises a bore (33), or conversely, the cutting blade (35) comprises a bore (39) and the wear protection element (20) comprises the stud bolt (22), so that the three components cutting blade (35), wear protection element (20), and mixing organ (100) are secured by means of the same stud bolt (22).

12. Biomass mixer (200, 300), for example a feed mixer wagon (201, 202), comprising
- a mixing container (10) with a filling opening (11) and an outlet opening,
- at least one mixing organ (100) arranged in the mixing container (10) and rotatable about an axis of rotation (30) according to one of claims 1 to 11 and/or a discharge device (60) according to one of claims 1 or 7 to 10, and
- a drive unit for driving the mixing organ (100).

13. Wear protection element (20, 20') or cutting blade (35) for a mixing organ (100) of a biomass mixer (200, 300), for example a feed mixer wagon (201, 202), **characterised in that:**
- the wear protection element (20, 20') comprises a wear protection element plate (21, 21') and at least one stud bolt (22) non-detachably attached to the wear protection element plate (21, 21') by a welded joint, or
- the cutting blade (35) comprises a cutting blade plate and at least one stud bolt (22) non-detachable attached to the cutting blade plate by a welded joint.

14. Method for manufacturing a wear protection element (20, 20') or a cutting blade (35) for a mixing organ (100) of a biomass mixer (200, 300), **characterised by** the following method steps:
- providing a steel plate for the manufacture of a wear protection element plate (21, 21') or a cutting blade plate,
- cutting out the wear protection element plate (21, 21') or the cutting blade plate from the steel plate,
- marking a position (P) intended for the subsequent mounting of a stud bolt (22) on the wear protection element plate (21, 21') or the cutting blade plate, by means of a marking (31),
- positioning the stud bolt (22) on the marking (31) applied to the wear protection element plate (21, 21') or the cutting blade plate,
- welding the stud bolt (22) to the wear protection element plate (21, 21') or the cutting blade plate to form a welded assembly.

## Revendications

1. Organe de mélange (100) ou dispositif de prélèvement (60) destiné à être utilisé dans un mélangeur de biomasse (200, 300), comportant au moins un élément de protection contre l'usure (20, 20') et/ou une lame de coupe (35) qui y sont fixés,
**caractérisé en ce que**
- l'élément de protection contre l'usure (20, 20') et/ou la lame de coupe (35) comprend une plaque d'élément de protection contre l'usure (21, 21') et un goujon (22) fixé à la plaque d'élément de protection contre l'usure (21, 21'),
- l'organe de mélange (100) ou le dispositif de prélèvement (60) comprend un alésage (24) ou un évidement destiné à recevoir le goujon (22) et
- l'élément de protection contre l'usure (20, 20') et/ou la lame de coupe (35) est fixé de manière amovible à l'organe de mélange (100) ou au dispositif de prélèvement (60) au moyen de son goujon (22) et d'un moyen de fixation (25) compatible avec le goujon (22).

2. Organe de mélange (100) selon la revendication 1, **caractérisé en ce que** l'organe de mélange (100) est une vis de mélange (15) comportant un tube central (37) et au moins une spire (16).

3. Organe de mélange (100) selon la revendication 1 ou 2, **caractérisé en ce que** l'élément de protection contre l'usure (20) et/ou la lame de coupe (35) présente un contour extérieur (19) et l'organe de mélange (100) présente un contour extérieur (26), et les contours extérieurs (19, 26) de l'élément de protection contre l'usure (20) et de l'organe de mélange (100) sont adaptés l'un à l'autre.

4. Organe de mélange (100) selon l'une des revendications 1 à 3, **caractérisé en ce que** l'élément de protection contre l'usure (20) et/ou la lame de coupe (35) présente une surface de contact (18) et l'organe de mélange (100) présente une surface de contact (27), et les surfaces de contact (18, 27) de l'élément de protection contre l'usure (20) et de l'organe de mélange (100) sont adaptées l'une à l'autre.

5. Organe de mélange (100) selon l'une des revendications 1 à 4, **caractérisé en ce que** au moins deux éléments de protection contre l'usure (20) et/ou lames de coupe (35) sont prévus et que les éléments de protection contre l'usure (20) et/ou les lames de coupe (35) adjacents sont liés les uns dans les autres sans laisser d'espace à l'état monté.

6. Organe de mélange (100) selon l'une des revendications 1 à 5, **caractérisé en ce que** l'organe de mélange (100) présente un axe de rotation (30) autour duquel il tourne, en fonctionnement, dans un sens de rotation de mélange (R1) et :
- l'élément de protection contre l'usure avant (20) ou la lame de coupe (35), vu dans le sens de rotation (R1), présente un bord arrière (29),
- l'élément de protection contre l'usure arrière (20) ou la lame de coupe (35), vu dans le sens de rotation (R1), présente un bord avant (28) et
- l'arête arrière (29) de l'élément de protection contre l'usure avant (20) ou de la lame de coupe (35) recouvre l'arête avant (28) de l'élément de protection contre l'usure arrière (20) ou de la lame de coupe (35),
de sorte que, lorsque l'organe de mélange (100) tourne dans le sens de rotation de mélange (R1), la matière à mélanger se trouvant sur l'organe de mélange (100) soit transférée sans résistance de l'élément de protection contre l'usure avant (20) ou de la lame de coupe (35) vers l'élément de protection contre l'usure arrière (20) ou la lame de coupe (35).

7. Organe de mélange (100) selon l'une des revendications 1 à 6 ou dispositif de prélèvement (60) selon la revendication 1, **caractérisé en ce que** la surface de contact (18) de l'élément de protection contre l'usure (20, 20') ou de la lame de coupe (35) comporte un repère (31) permettant d'identifier une position (P) prédéfinie pour la mise en place du goujon (22).

8. Organe de mélange (100) ou dispositif de prélèvement (60) selon la revendication 7, **caractérisé en ce que** le goujon (22) présente un diamètre (D1) et que le repère (31) prévu pour la mise en place du goujon (22) dépasse le diamètre (D1).

9. Organe de mélange (100) ou dispositif de prélèvement (60) selon la revendication 7 ou 8, **caractérisé en ce que** le repère (31) est constitué d'un cercle (32) dont le diamètre (D2) est égal ou supérieur au diamètre (D1) du goujon (22).

10. Organe de mélange (100) selon l'une des revendications 1 à 9 ou dispositif de prélèvement (60) selon la revendication 1, 7, 8 ou 9, **caractérisé en ce que** l'élément de protection contre l'usure (20, 20') comporte un ou plusieurs repères indiquant l'état d'usure de l'élément de protection contre l'usure (20).

11. Organe de mélange (100) selon l'une des revendications 1 à 10, **caractérisé en ce que** tant une lame de coupe (35) qu'un élément de protection contre l'usure (20) sont fixés à l'organe de mélange (100) au moyen du même goujon (22), soit la lame de coupe (35) s'engageant dans le goujon (22) et l'élément de protection contre l'usure (20) un alésage (33), ou inversement, la lame de coupe (35) un alésage (39) et l'élément de protection contre l'usure (20) le goujon (22), de sorte que les trois composants, la lame de coupe (35), l'élément de protection contre l'usure (20) et l'organe de mélange (100) sont fixés au moyen du même goujon (22).

12. Mélangeur de biomasse (200, 300), par exemple une remorque mélangeuse d'aliments pour animaux (201, 202), comprenant
- une cuve de mélange (10) dotée d'une ouverture de remplissage (11) et d'une ouverture de déchargement,
- au moins un organe de mélange (100) disposé dans la cuve de mélange (10) et pouvant tourner autour d'un axe de rotation (30), selon l'une des revendications 1 à 11, et/ou un dispositif de prélèvement (60) selon l'une des revendications 1 ou 7 à 10, et
- un dispositif d'entraînement destiné à entraîner l'organe de mélange (100).

13. Élément de protection contre l'usure (20, 20') ou lame de coupe (35) pour un organe de mélange (100) d'un mélangeur de biomasse (200, 300), par exemple d'une remorque mélangeuse d'aliments pour animaux (201, 202), **caractérisé en ce que** :
- l'élément de protection contre l'usure (20, 20') comprend une plaque d'élément de protection contre l'usure (21, 21') et au moins un goujon (22) fixé de manière inamovible à la plaque d'élément de protection contre l'usure (21, 21'), ou
- la lame de coupe (35) comporte une plaque de lame de coupe et au moins un goujon (22) fixé de manière inamovible à la plaque de lame de coupe.

14. Procédé de fabrication d'un élément de protection contre l'usure (20, 20') ou d'une lame de coupe (35) pour un organe de mélange (100) d'un mélangeur de biomasse (200, 300), **caractérisé par** les étapes suivantes :
- mise à disposition d'une plaque d'acier pour la fabrication d'une plaque d'élément de protection contre l'usure (21, 21') ou d'une plaque de lame de coupe,
- découpage de la plaque d'élément de protection contre l'usure (21, 21') ou de la plaque de lame de coupe à partir de la plaque d'acier,
- marquage, à l'aide d'un repère (31), d'une position (P) prévue pour la fixation ultérieure d'un goujon (22) sur la plaque d'élément de protection contre l'usure (21, 21') ou sur la plaque de lame de coupe,
- positionnement du goujon (22) sur le repère (31) apposé sur la plaque d'élément anti-usure (21, 21') ou sur la plaque de lame de coupe,
- soudage de goujon (22) à la plaque d'éléments de protection contre l'usure (21, 21') ou à la plaque de lames de coupe pour former un ensemble soudé.
